# FASCICULE DE BREVET EUROPEEN

(11) **EP 2 059 829 B1**
(45) Date de publication et mention de la délivrance du brevet: **27.02.2013**
(21) Numéro de dépôt: 07803134.1
(22) Date de dépôt: 31.08.2007
(51) Int. Cl.: G01S 5/16

(54) **DISPOSITIF DE DETECTION OPTIQUE DE POSITION ET/OU D'ORIENTATION D'OBJETS ET PROCEDES DE DETECTION ASSOCIES**
EINRICHTUNG ZUR OPTISCHEN DETEKTION VON POSITION UND/ODER ORIENTIERUNG VON OBJEKTEN UND DIESBEZÜGLICHE DETEKTIONSVERFAHREN
DEVICE FOR OPTICALLY DETECTING POSITION AND/OR ORIENTATION OF OBJECTS AND ASSOCIATED DETECTION METHODS

(30) Priorité: 05.09.2006 FR 0607764
(43) Date de publication de la demande: 20.05.2009
(73) Titulaire: THALES, 92200 Neuilly sur Seine (FR)
(72) Inventeur: LACOSTE, Lilian, F-33700 Merignac (FR); LESCOURRET, Jean-Louis, F-33700 Merignac (FR); RAYBAUT, Pierre, F-91190 GIF SUR YVETTE (FR); ROUZES, Siegfried, F-33185 Le Haillan (FR)
(74) Mandataire: Esselin, Sophie
(86) Numéro de dépôt international: PCT/EP2007/059147
(87) Numéro de publication internationale: WO 2008/028878

(56) Documents cités:
- WO-A-2005/052718
- WO-A-2005/059881
- GB-A- 2 254 510
- US-A- 4 396 945
- ANONYMOUS: "Fourth Dimension Display"[Online] 27 avril 2006 (2006-04-27), pages 1-2, XP002427683 Extrait de l'Internet: URL:http://www.forthdd.com/opticalengines. pdf> [extrait le 2007-03-30]
- ANONYMOUS: "PVPRO laser projector"[Online] 9 février 2006 (2006-02-09), XP002427682 Extrait de l'Internet: URL:http://www.audioholics.com/news/editor ials/laser-projectors-coming-to-cell-phone s-and-pdas> [extrait le 2007-03-30]
- GRIESSER A ET AL: "Adaptive real-time 3D acquisition and contour tracking within a multiple structured light system" COMPUTER GRAPHICS AND APPLICATIONS, 2004. PG 2004. PROCEEDINGS. 12TH PACIFIC CONFERENCE ON SEOUL, KOREA 6-8 OCT. 2004, PISCATAWAY, NJ, USA,IEEE, 6 octobre 2004 (2004-10-06), pages 361-370, XP010735064 ISBN: 0-7695-2234-3
- GIOVANNA SANSONI ET AL: "Calibration and Performance Evaluation of a 3-D Imaging Sensor Based on the Projection of Structured Light" IEEE TRANSACTIONS ON INSTRUMENTATION AND MEASUREMENT, IEEE SERVICE CENTER, PISCATAWAY, NJ, US, vol. 49, no. 3, juin 2000 (2000-06), XP011025022 ISSN: 0018-9456

## Description

La présente invention concerne le domaine des dispositifs de détection optique de position et d'orientation d'objets dans l'espace. Elle s'applique plus particulièrement dans le domaine aéronautique où dans ce cas l'objet détecté est un casque de pilote.

La détermination du positionnement d'un point dans l'espace et la détermination de l'attitude d'un objet quelconque sont des problèmes concernant de nombreux domaines techniques.

Les différentes solutions généralement apportées doivent lever toute ambiguïté de position ou d'attitude, répondre à une dynamique plus ou moins sévère des systèmes et satisfaire une précision élevée, en particulier dans le domaine aéronautique.

Dans les systèmes de détection de position et d'attitude d'objets dans l'espace répondant à une précision de quelques millimètres en position et au degré en attitude, de nombreuses applications existent dans différents domaines.

Ces systèmes sont utilisés en aéronautique, pour la détection de posture de tête, notamment pour les casques d'avions d'arme, d'hélicoptères militaires, civils ou para-civils. Dans ce dernier cas d'application para-civiles, il peut s'agir de missions de sauvetage en mer par exemple. Ils sont utilisés également pour la détection de casques de simulation, cette détection peut alors être combinée à un dispositif d'oculométrie, également appelé eyetracker, pour la détection de position du regard. Dans le domaine de la réalité virtuelle et des jeux, il existe également de nombreuses applications de ces systèmes.

Plus généralement, dans le domaine de la détection de posture générique, il existe également de nombreuses applications, notamment dans le domaine médical pour les opérations à distance et le contrôle d'instruments, dans le domaine du contrôle de position pour des machines outils asservies ou de la commande à distance et enfin pour le cinéma, afin de reproduire les mouvements en images de synthèse.

Ces différentes applications ont des solutions techniques répondant à des exigences plus ou moins contraignantes.

Concernant des applications à faibles contraintes, notamment en terme de précisions, il existe différents systèmes de détection de position et/ou d'orientation d'objets.

Par exemple, les dispositifs à reconnaissance de patchs ou de formes par caméras utilisent des dessins imprimés sur un objet. Plusieurs caméras observent la scène et déterminent la configuration spatiale du dessin observé.

Il existe également des dispositifs à reconnaissance de sphères par caméras, qui sont utilisés, par exemple au cinéma, pour la reconstitution du mouvement humain. Le dispositif utilise plusieurs caméras qui observent des sphères réfléchissantes et déterminent leur trajectoire.

Enfin il existe des dispositifs de positionnement à ultrasons reposant sur le principe de triangulation entre émetteurs et récepteurs ultrasoniques.

Concernant des applications plus performantes, en particulier dans le domaine aéronautique, les dispositifs de détection de posture de casques dans les aéronefs utilisent deux principales techniques qui sont la détection de posture électromagnétique et la détection de posture électro-optique.

La détection de posture électromagnétique nécessite des dispositifs comprenant des moyens d'émission d'un champ électromagnétique et des capteurs de réception sur le casque permettant de déterminer leur position par rapport à l'émetteur. La demande de brevet GB2254510 décrit un dispositif selon le préambule de la revendication 1.

La détection de posture électro-optique nécessite généralement des motifs de diodes électroluminescentes, encore appelé LEDs, disposés sur le casque et plusieurs capteurs de type caméras montés dans le cockpit permettant de déterminer la configuration spatiale d'un motif de LEDs.

Pour améliorer les performances, il est fréquent de combiner d'autres dispositifs comprenant des capteurs de types gyroscopiques, accéléro-métriques ou magnéto-métriques. Cette hybridation de capteurs permet d'améliorer les performances dynamiques ou de lever une ambiguïté d'orientation. Ces capteurs ne modifient pas les performances statiques de positionnement des dispositifs de détection cités précédemment.

Néanmoins, ces solutions présentent un certain nombre d'inconvénients et de limitations, particulièrement dans le domaine aéronautique.

En ce qui concerne les dispositifs électro-optiques, la cartographie du cockpit ou plus généralement la topologie de la zone contenant l'objet doit être connue. Dans l'aéronautique, cette topologie peut subir des déformations ou être difficile à cartographier.

Par ailleurs, ces mêmes dispositifs nécessitent plusieurs caméras et plusieurs capteurs. Les calculs de position demandent de nombreuses ressources et l'analyse temps réel est complexe à mettre en oeuvre.

De plus, la diffusion dans la zone de détection de la lumière des LEDs ne permet pas de s'affranchir complètement des perturbations de l'environnement lumineux du cockpit dues au soleil ou à des réflexions parasites sur la verrière.

En ce qui concerne les dispositifs de détection de posture électromagnétique, des solutions robustes sont difficiles à mettre en oeuvre.

En particulier, dans le domaine aéronautique, les rayonnements parasites et les perturbations électromagnétiques peuvent dégrader les performances des systèmes existants.

Le dispositif selon l'invention permet notamment de pallier les inconvénients précités. En effet, le dispositif est du type électro-optique. Il permet de s'affranchir des inconvénients des dispositifs électromagnétiques.

D'autre part, il utilise préférentiellement des moyens de projection d'images du type vidéo-projecteur holographique.

En particulier, les vidéo-projecteurs holographiques monochromatiques ont les avantages d'émettre dans une bande de fréquences très étroite, une image nette dans un large champ et de permettre de concentrer une forte énergie dans une zone très faible. On peut très facilement discriminer les signaux issus du vidéo-projecteur holographique de la lumière parasite.

Plus précisément, le dispositif selon l'invention, comprend des capteurs électro-optiques disposés sur l'objet et répartis en groupe, appelé cluster, des moyens d'analyse et de calcul permettant de retrouver la position et/ou l'attitude de l'objet, des moyens électroniques de génération d'images et des moyens de projection optiques comprenant un afficheur et une optique de projection.

Les moyens de projection optiques émettent dans un cône de projection une image nette en tout point de la zone de débattement dans laquelle peut se déplacer l'objet. L'analyse des portions d'images reçues par les capteurs d'au moins un cluster permet de repérer la position et/ou l'attitude de l'objet dans le repère défini par les moyens de projection, celui-ci étant constitué d'un plan perpendiculaire à l'axe de projection, dit plan-image, et de l'axe de projection.

Avantageusement, les moyens de projection sont un vidéo-projecteur holographique. Celui-ci comporte une source de lumière cohérente, un afficheur permettant de réaliser une image de phase, l'optique de projection étant alors agencée de façon à créer à partir de l'onde émise par la source de lumière, une première onde référence et une seconde onde modulée par l'afficheur et comportant des moyens permettant de faire interférer ces deux ondes.

De plus, ce vidéo-projecteur holographique peut projeter des images dans un angle solide de 10 degrés minimum à 120 degrés maximum et peut atteindre une vitesse de projection d'au moins 24 images par seconde.

La source de lumière d'un tel vidéo-projecteur holographique peut être monochromatique et émettre dans une bande de fréquences dans la bande infra-rouge ou proche infra-rouge, la sensibilité des capteurs étant adaptée au rayonnement émis.

Avantageusement, les images projetées peuvent être polarisées. Par ailleurs, tout type d'image peut être généré par un tel vidéo-projecteur holographique y compris des mires occupant tout ou une partie de l'image et comportant des motifs lumineux d'intensité constante.

A titre d'exemple, ces mires sont composées de motifs lumineux dont la forme peut être des barres horizontales et/ ou verticales ou encore des cercles ou des anneaux concentriques, chaque anneau pouvant être alternativement composé de parties angulaires sombres et brillantes, le nombre de portions angulaires variant d'un anneau à l'anneau suivant.

Tout type de combinaison de mires est possible dans l'image générée par le vidéo-projecteur holographique.

Le dispositif selon l'invention utilise des capteurs de lumière, matriciels ou linéiques. Ceux-ci peuvent être disposés par groupe, appelé encore cluster, ayant des formes géométriques adaptées pour augmenter les performances du dispositif et réduire les temps de calculs.

Par exemple, des groupes de trois capteurs peuvent être agencés en forme d'étoile ou en forme de parallélogramme dans le dispositif de l'invention.

Les capteurs électro-optiques et les moyens d'analyse peuvent avantageusement interpréter et/ou discriminer la polarisation des signaux reçus.

Avantageusement, un premier procédé de détection optique de la position et de l'orientation d'un objet dans l'espace au moyen du dispositif de détection selon l'invention comporte :
● une première étape de génération par le vidéo-projecteur holographique d'une succession d'images, toutes différentes, chaque image donnant un signal différent sur au moins un cluster;
● une seconde étape d'analyse des signaux reçus par les capteurs du cluster permettant de retrouver la position et/ou l'attitude des capteurs dans l'espace sans indication à priori.

Avantageusement, un second procédé de détection optique de la position et de l'orientation d'un objet dans l'espace au moyen du dispositif selon l'invention comporte:
● une première étape de génération d'une image comprenant des motifs lumineux, lesdits motifs étant générés de façon à éclairer les clusters ;
● une seconde étape d'analyse des signaux reçus par les capteurs permettant de retrouver la position des capteurs dans l'espace ;
● enfin, une troisième étape d'asservissement permettant de repositionner les motifs de l'image générée sur les clusters.

Avantageusement, un dernier procédé combinant les deux précédents procédés pré-cités comporte une étape d'initialisation réalisée selon le premier procédé et une étape de fonctionnement correspondant au second procédé.

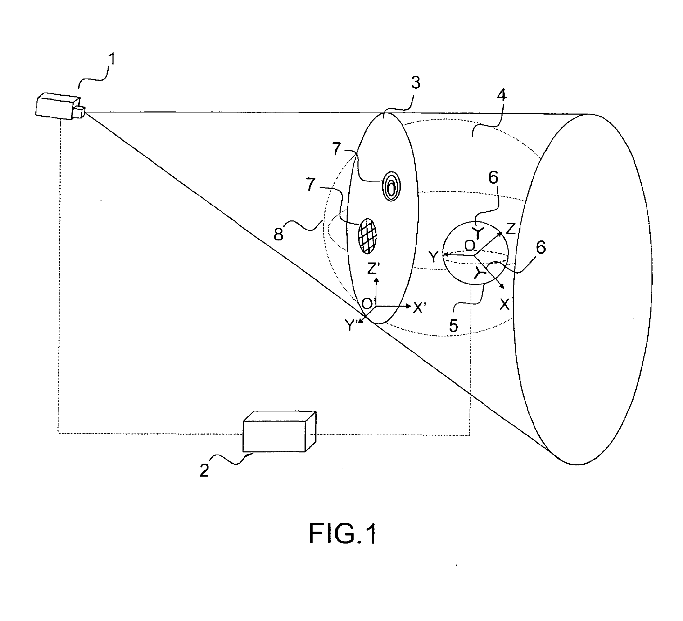

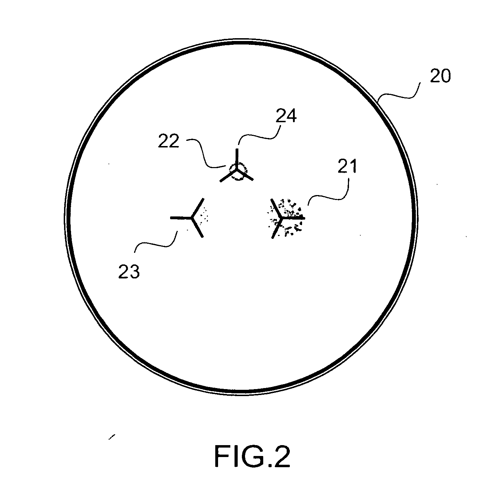

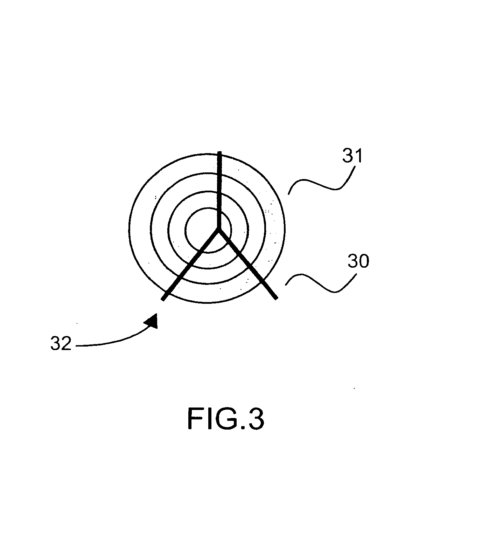

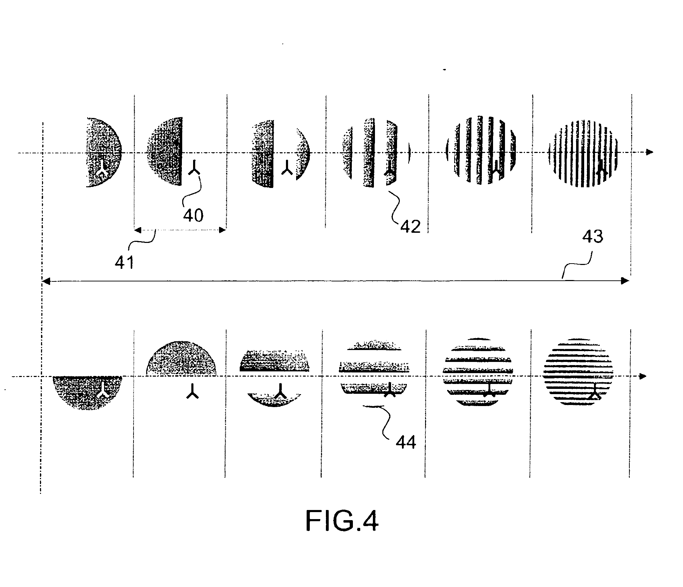

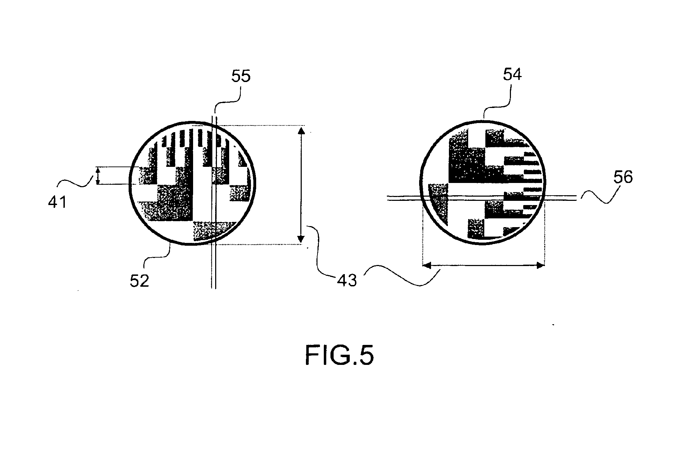

D'autres caractéristiques et avantages de l'invention apparaîtront à l'aide de la description qui suit, faite en regard des dessins annexés qui représentent :
● la figure 1 représente le dispositif général selon l'invention en vue 3D ;
● la figure 2 représente deux mires de position et une mire de roulis ;
● la figure 3 représente la projection d'une mire de position sur un cluster ;
● la figure 4 est un exemple de séquence de mires projetées sur un cluster en étoile ;
● la figure 5 est une représentation de la combinaison de mires selon la figure 4 projetées successivement ;

Dans tout ce qui suit, le dispositif décrit est utilisé pour des applications aéronautiques où l'objet est un casque de pilote. Il est, bien entendu, possible d'adapter le dispositif, sans modification majeure, à la détection d'autres objets.

Comme indiqué figure 1, le dispositif selon l'invention, comprend un projecteur d'images 1. Ledit projecteur d'images émet une image 3, au point dans toute la zone 4, comprenant un ensemble de mires 7. Les mires sont projetées sur des ensemble de capteurs électro-optiques 6 situés sur l'objet 5. Une mire est un ensemble de motifs géométriques lumineux sur fond noir. Ces mires peuvent être des cercles, des anneaux, des barres ou une forme géométrique remarquable. L'ensemble de capteurs est appelé cluster. Ces capteurs peuvent être regroupés de manière à ce que le cluster ait des propriétés géométriques pour la détection. Afin de retrouver la position et l'orientation des clusters dans l'espace, le dispositif selon l'invention comprend des moyens d'analyse des données issues des capteurs. La position et l'orientation, d'au moins un cluster, étant déterminées, la position et l'orientation de l'objet sont alors connues.

Pour que le dispositif puisse fonctionner correctement, il est indispensable que les motifs des mires soient nets en tout point des capteurs. Il existe différents moyens optiques permettant d'obtenir cette propriété.

A cet effet, un exemple de réalisation de l'invention utilise comme moyens de projection, un vidéo-projeteur holographique 1. De tels vidéo-projecteurs holographiques sont réalisés et commercialisés, par exemple, par la société Light Blue Optics et sont connus sous la marque PVPro. Ce vidéo-projecteur holographique possède la propriété avantageuse d'émettre une image nette en tout point de la zone de débattement 8.

Ce vidéo-projecteur holographique comporte une source de lumière cohérente, qui est généralement une diode laser, un afficheur permettant de réaliser une image de phase, des moyens optiques agencés de façon à créer à partir de l'onde émise par la source de lumière, une première onde référence et une seconde onde modulée par l'afficheur et des moyens permettant de faire interférer ces deux ondes. L'image finale obtenue est un hologramme de Fraunhofer de l'image de phase générée sur l'afficheur. Il est possible de générer tout type d'image par ce moyen. L'afficheur peut être un afficheur à cristaux liquides, par exemple de type LCOS.

L'image 3 générée par le vidéo-projecteur holographique, est composée de mires 7 qui peuvent être des mires localisées sur un capteur, appelées mires de positions ou mires de roulis, ou des mires pouvant couvrir l'ensemble du champ, occupant ainsi toute l'image ou une grande partie. Les mires peuvent être émises séquentiellement dans le temps, les motifs composant la mire pouvant changer ou rester identiques entre deux émissions successives.

Le dispositif de la figure 1 montre un exemple de clusters 6, composés de trois capteurs chacun, disposés en étoiles. Chacun des clusters est contenu dans un plan en surface de l'objet 5. Les capteurs peuvent être par exemple des capteurs matriciels linéiques.

Les mires ainsi générées par le vidéo-projecteur holographique sont projetées localement sur les plans d'un nombre suffisant de clusters de l'objet. Chaque cellule de chaque capteur électro-optique composant un cluster détecte la présence des signaux lumineux issus des mires. Ces signaux sont envoyés au calculateur pour analyse.

La taille des mires et la forme et le nombre des capteurs sont des données optimisées dépendant de l'espace de débattement et de la forme et du volume de l'objet ainsi que de la précision désirée. Le nombre de clusters et la disposition et le nombre de mires doivent être suffisant pour que la projection des mires atteignent un nombre suffisant de clusters permettant de retrouver la position de l'objet à partir des moyens d'analyse 2. Les moyens d'analyse sont généralement un calculateur électronique.

Il existe différents modes de fonctionnement du dispositif. Un premier mode de fonctionnement est un mode asservi. La détermination de la position et de l'orientation des clusters ou de l'objet dans l'espace dépend d'une position et d'une orientation connues à priori dans un passé proche et estimées à l'instant de la projection, les mires générées étant émises en direction des dits clusters.

Dans ce mode, le calculateur 2 analyse les positions et les orientations de un ou plusieurs clusters. Ce calculateur, à partir de ces données, asservit la position des mires projetées par le vidéo-projecteur holographique. A cet effet, la position et l'orientation estimées des clusters dans l'espace sont utilisés pour déterminer la prochaine position des mires à projeter dans le plan image.

La figure 2 représente un exemple de mires utilisées dans ce premier mode de fonctionnement. Deux mires de position 22 et 23 et une mire de roulis 21 sont représentées à l'intérieur de la zone 20 délimitée par la partie de l'objet visible depuis le projecteur, cette zone est représentée par un cercle. Ces trois mires sont locales, c'est à dire qu'elles sont centrées autour d'un cluster.

La mire de position 22 est un exemple de mire possédant un seul anneau lumineux. Certaines cellules d'un capteur du cluster 24 reçoivent de la lumière et fournissent au calculateur des informations qui permettent facilement d'estimer, par construction, la position du cluster dans l'anneau lumineux.

La mire de position 23 est un autre exemple de mire possédant plusieurs anneaux lumineux. De la même manière, le calculateur est capable, à partir des informations de chaque cellule de chaque capteur, de restituer la position du cluster dans les anneaux lumineux.

La mire 21 est un exemple de mire de roulis. Celle-ci comporte différents anneaux concentriques, chaque anneau comprenant des portions angulaires lumineuses et sombres de largeur constante, disposées de telle manière que sur la largeur d'une portion, la séquence formée par l'ensemble des portions sur un rayon soit unique. La position angulaire, c'est à dire l'orientation, est déduite par analyse des informations collectées de chaque capteur du cluster.

La figure 3 représente un exemple de mire de position et d'un cluster sur le même plan. L'asservissement des mires projetées par le vidéo-projecteur permet de situer la mire 31 localement autour du cluster 32.

Chaque cellule de chaque capteur 30 restitue au calculateur l'information du signal reçu au calculateur. Celui-ci à partir de la répartition de la lumière sur le capteur peut, par construction, estimer la position du cluster dans le plan image. Dans la pratique, la génération des mires, ainsi que l'estimation des paramètres position et/ou l'attitude, prend en compte des corrections de déformation liées à la projection.

La vitesse de projection des images générées par le projecteur holographique doit être plus rapide que la vitesse de débattement de l'objet.

A cet effet, le vidéo-projecteur holographique est capable d'émettre une séquence d'images à la vitesse de 24 images par seconde. Cette vitesse est suffisante pour émettre deux mires successives sur au moins un cluster.

Dans un autre mode de fonctionnement, il est nécessaire de retrouver la position et l'orientation de l'objet, c'est à dire sans connaître la position et l'orientation initiales de l'objet à priori.

Un moyen, à l'aide du vidéo-projecteur holographique, d'estimer la position de l'objet dans la zone de débattement est d'émettre une séquence de mires dans un temps suffisamment court. A chaque projection, une seule mire occupe entièrement tout ou une grande partie de l'image générée. De plus, entre deux projections successives, les motifs lumineux de ces mires sont différents.

L'analyse des signaux reçus de chaque cellule de chaque capteur pendant toute la séquence permet de calculer la position des capteurs dans l'espace.

La figure 4 montre un exemple de mires 42 et 44 circulaires dont les motifs sont des bandes lumineuses séparées alternativement par des bandes sombres, respectivement verticales et horizontales.

Une première rangée de mires représente une séquence particulière de mires dont les motifs sont des bandes droites verticales. Cette séquence d'images est générée dans un temps 43. L'analyse de la séquence de signaux reçus dans une cellule permet de calculer la position verticale de chaque cellule dans la mire.

Une deuxième rangée de mires représente une autre séquence de mires dont les motifs sont des bandes droites horizontales. Cette séquence d'images est générée dans un second temps 43. L'analyse de la séquence de signaux reçus dans une cellule permet de calculer la position horizontale de chaque cellule dans la mire.

La séquence d'images entière est composée des deux précédentes séquences. Ces séquences d'images peuvent être, par exemple, générées successivement. Chaque image peut comprendre alternativement une mire à bandes horizontales et la suivante à bandes verticales.

Le cluster 40 est représenté dans le plan de la mire, dit plan image, ledit cluster est exposé aux signaux lumineux des motifs de chaque mire. Le principe est d'émettre, dans un temps 43, une séquence de mires 42 chacune exposée pendant un intervalle de temps 41. La largeur des bandes et le pas entre les bandes qui composent chaque mire sont de plus en plus petits. Ils peuvent diminuer d'un facteur deux entre chaque projection par exemple.

La figure 5 représente un exemple de la représentation d'une compilation 52 de mires 42 comportant des bandes verticales lumineuses et une autre représentation d'une compilation 54 de mires 44 comportant des bandes horizontales lumineuses. La compilation de mires, comportant des bandes verticales représente la succession de signaux lumineux ou sombres reçus par une cellule d'un capteur quand il se trouve dans la bande 55 pendant l'intervalle de temps 41. La séquence de signaux reçus dans le temps 43 est analysée. Par construction, la position horizontale de la cellule dans la mire est déduite.

De la même manière la cellule interprète sa position verticale quand elle se trouve dans la bande 56 de la compilation de mires 54.

Pour lever toute ambiguïté de position lors de la projection de la première image sur les capteurs, c'est à dire de différencier le cas d'un signal reçu par la cellule issu d'une frange sombre et le cas où aucun signal n'est reçu, il est nécessaire que bandes lumineuses des deux premières mires projetées soient de la même taille et alternées.

Avantageusement, un codage binaire peut être utilisé pour l'analyse de ces signaux. Dans le cas d'un signal issu d'une frange lumineuse la cellule interprète un bit de valeur égale à 1, dans le cas contraire elle interprète un bit de valeur égale à 0.

Les bandes diminuant d'une projection à la suivante dans une même séquence, les bits de poids forts sont interprétés au début de la séquence. L'information de la précision de la position verticale et / ou horizontale est interprétée à la fin de la séquence, par les bits de poids faibles.

De telles séquences de mires, associées à ce type de codage binaire du signal reçu, permettent de déterminer directement la position verticale et respectivement horizontale d'une cellule d'un capteur dans la mire.

La précision de la position d'une cellule d'un capteur est déterminée à l'erreur près de la largeur de la bande lumineuse ou sombre de la dernière mire projetée de la séquence.

De manière générale, toute image ou série d'images non ambiguë peut être utilisée comme moyen de détermination de la position initiale.

Les deux modes de fonctionnement, asservi et absolu, peuvent se combiner. Lors de l'initialisation ou da réinitialisation de la détection de l'objet, c'est à dire lorsque la position de l'objet n'est pas connue, la position et l'orientation de l'objet peuvent être déterminé par le deuxième mode de détection. Puis dans un deuxième temps, la position et l'orientation étant déterminée par l'étape d'initialisation de la détection, une étape de détection en mode asservi débute. La deuxième étape se déroule de manière autonome jusqu'à une interruption volontaire de la détection ou jusqu'à la perte de position de l'objet. Dans ce dernier cas la première étape, c'est à dire le deuxième mode de fonctionnement, peut être réactivée de manière automatique ou manuellement pour retrouver la position de l'objet.

L'intérêt de l'utilisation du mode asservi est qu'il permet la génération d'un nombre très limité de mires entre deux mesures. On peut utiliser, par conséquent, des cadences de mesures très rapides.

## Revendications

1. Dispositif de détection optique de position et/ou d'orientation d'un objet se déplaçant dans une zone de débattement donnée, ledit dispositif comprenant des capteurs électro-optiques disposés sur ledit objet répartis en groupe, appelés clusters, des moyens d'analyse et de calcul permettant de repérer la position et/ou l'attitude dudit objet, des moyens électroniques de génération d'images et des moyens de projection optiques comprenant un afficheur et une optique de projection, **caractérisé en ce que** les moyens de projection optiques émettent dans un cône de projection une image nette en tout point de la zone de débattement, l'analyse des signaux reçus par les capteurs d'au moins un cluster permettant de repérer la position et/ou l'attitude de l'objet dans le repère défini par les moyens de projection, celui-ci étant constitué d'un plan perpendiculaire à l'axe de projection, dit plan-image, et de l'axe de projection.

2. Dispositif de détection selon la revendication 1, **caractérisé en ce que** les moyens de projection d'images sont un vidéo-projecteur holographique, ledit vidéo-projecteur holographique comportent une source de lumière cohérente, un afficheur permettant de réaliser une image de phase, l'optique de projection étant agencée de façon à créer à partir de l'onde émise par la source de lumière, une première onde référence et une seconde onde modulée par l'afficheur et comportant des moyens permettant de faire interférer ces deux ondes.

3. Dispositif de détection selon la revendication 2, **caractérisé en ce que** les moyens de projection projettent dans un angle solide de 10 degrés minimum à 120 degrés maximum.

4. Dispositif de détection selon l'une quelconque des revendications 2 ou 3, **caractérisé en ce que** le moyen de projection génère les images à la vitesse d'au moins vingt-quatre images par seconde.

5. Dispositif de détection selon l'une quelconque des revendications 2, 3 ou 4, **caractérisé en ce que** le moyen de projection génère des images polarisées.

6. Dispositif de détection selon l'une quelconque des revendications 5, **caractérisé en ce que** les capteurs électro-optiques et les moyens d'analyse interprètent et/ou discriminent la polarisation des signaux reçus.

7. Dispositif de détection selon l'une quelconque des revendications 2, 3, 4, 5 ou 6, **caractérisé en ce que** les images projetées dans le plan image par les moyens de projection comprennent un ensemble de mires, les mires étant composées de motifs lumineux.

8. Dispositif de détection selon la revendication 7, **caractérisé en ce que** les mires sont composées de motifs d'intensité lumineuse constante.

9. Dispositif de détection selon l'une quelconque des revendications 7 ou 8, **caractérisé en ce que** la source de lumière est monochromatique et émet dans une bande de fréquences dans la bande infra-rouge ou proche infra-rouge, la sensibilité des capteurs étant adaptée au rayonnement émis.

10. Dispositif de détection selon l'une quelconque des revendications 7, 8 ou 9, **caractérisé en ce qu'**au moins une mire est composée de motifs lumineux concentriques, ladite mire étant une mire de détection de position.

11. Dispositif de détection selon l'une quelconque des revendications 7, 8 ou 9, **caractérisé en ce qu'**au moins une mire est composée d'anneaux concentriques, chaque anneau étant alternativement composé de parties angulaires sombres et brillantes, le nombre de portions angulaires variant d'un anneau à l'anneau suivant, ladite mire étant une mire de détection de roulis.

12. Dispositif de détection selon l'une quelconque des revendications 7, 8, 9, 10 ou 11, **caractérisé en ce que** l'image comporte deux mires de détection de position et une mire de détection de roulis.

13. Dispositif de détection selon l'une quelconque des revendications 7, 8 ou 9, **caractérisé en ce qu'**une seule mire projetée occupant tout ou une partie de l'image est composée de motifs dont la forme est une série de bandes parallèles alternativement sombres et lumineuses.

14. Dispositif de détection selon la revendication 13, caractérisé en ce les bandes sont de largeur identique, le pas séparant deux bandes successives étant constant.

15. Dispositif de détection selon la revendication 13, **caractérisé en ce qu'**une série de mires soient projetées successivement dans le temps avec des motifs dont le pas et la largeur changent à chaque image générée.

16. Dispositif de détection selon la revendication 13, caractérisé en ce la taille de la bande et du pas diminue d'un facteur 2 entre deux projections successives.

17. Dispositif de détection selon la revendication 1, **caractérisé en ce que** les capteurs sont des capteurs matriciels, linéiques ou de lumière.

18. Dispositif de détection de position d'objet selon la revendication 17, **caractérisé en ce que** la topologie des capteurs, sur l'objet, est formée de plusieurs clusters de capteurs chaque cluster ayant une forme plane composée de trois branches en étoile.

19. Dispositif de détection de position d'objet selon la revendication 17, **caractérisé en ce que** la topologie des capteurs, sur l'objet, est formée de plusieurs clusters de capteurs chaque cluster ayant une forme plane parallélépipédique.

20. Dispositif de détection selon l'une quelconque des revendications précédentes, **caractérisé en ce que** l'objet est un casque et la zone de débattement une partie du cockpit.

21. Procédé de détection optique de la position et de l'orientation d'un objet dans l'espace au moyen d'un dispositif de détection selon l'une quelconque des revendications 13, 14, 15 ou 16, **caractérisé en ce que** ledit procédé comporte une première étape de génération par le vidéo-projecteur holographique d'une succession d'images, toutes différentes, chaque image donnant un signal différent sur au moins un cluster et une seconde étape d'analyse des signaux reçus par les capteurs du cluster permettant de retrouver la position et/ou l'attitude des capteurs dans l'espace sans indication à priori.

22. Procédé de détection optique de la position et de l'orientation d'un objet dans l'espace au moyen d'un dispositif selon l'une quelconque des revendications 7, 8, 9, 10, 11 ou 12, **caractérisé en ce qu'**il comporte:
● une première étape de génération d'une image comprenant des motifs lumineux, lesdits motifs étant générés de façon à éclairer les clusters ;
● une seconde étape d'analyse des signaux reçus par les capteurs permettant de retrouver la position des capteurs dans l'espace ;
● enfin, une troisième étape d'asservissement permettant de repositionner les motifs de l'image générée sur les clusters.

23. Procédé de détection optique de position d'un objet, **caractérisé en ce qu'**il comporte une étape d'initialisation réalisée selon le procédé de la revendication 21 et une étape de fonctionnement correspondant au procédé selon la revendication 22.

## Claims

1. A device for optically detecting the position and/or orientation of an object moving in a given zone of travel, said device comprising electro-optic sensors disposed on said object distributed into groups, referred to as clusters, means for analysing and calculating allowing the identification of the position and/or the attitude of said object, electronic means for generating images and optical projection means comprising a display and projection optics, **characterised in that** the optical projection means emits a clear image in a projection cone at all points of the zone of travel, the analysis of the signals received by the sensors of at least one cluster allowing the identification of the position and/or the attitude of the object in the reference defined by the projection means, said projection means being constituted by a plane that is perpendicular to the axis of projection, referred to as image plane, and of the axis of projection.

2. The detection device according to claim 1, **characterised in that** the means for projecting images are a holographic video projector, said holographic video projector comprising a coherent light source, a display for realising a phase image, the projection optics being arranged so as to create, from the wave emitted by the light source, a first reference wave and a second wave modulated by the display and comprising means that allow these two waves to interfere.

3. The detection device according to claim 2, **characterised in that** the projection means project over a solid angle of 10 degrees minimum to 120 degrees maximum.

4. The detection device according to claim 2 or 3, **characterised in that** the projection means generates the images at a speed of at least twenty four images per second.

5. The detection device according to claim 2, 3 or 4, **characterised in that** the projection means generates polarised images.

6. The detection device according to claim 5, **characterised in that** the electro-optic sensors and the analysis means interpret and/or discriminate the polarisation of the received signals.

7. The detection device according to claim 2, 3, 4, 5 or 6, **characterised in that** the images projected in the image plane by the projection means comprise a set of sights, the sights being composed of light patterns.

8. The detection device according to claim 7, **characterised in that** the sights are composed of patterns with a constant light intensity.

9. The detection device according to claim 7 or 8, **characterised in that** the light source is monochromatic and emits in a frequency band in the infrared or near infrared band, the sensitivity of the sensors being matched to the emitted radiation.

10. The detection device according to claim 7, 8 or 9, **characterised in that** at least one sight is composed of concentric light patterns, said sight being a position detection sight.

11. The detection device according to claim 7, 8 or 9, **characterised in that** at least one sight is composed of concentric rings, each ring being alternately composed of dark and light angular parts, the number of angular portions varying from one ring to the next, said sight being a roll detection sight.

12. The detection device according to claim 7, 8, 9, 10 or 11, **characterised in that** the image comprises two position detection sights and one roll detection sight.

13. The detection device according to claim 7, 8 or 9, **characterised in that** a single projected sight occupying all or part of the image is composed of patterns, the shape of which is a series of alternately dark and light parallel bands.

14. The detection device according to claim 13, **characterised in that** the bands are of identical width, the pitch separating two successive bands being constant.

15. The detection device according to claim 13, **characterised in that** a series of sights is successively projected over time with patterns with a pitch and a width which change for each generated image.

16. The detection device according to claim 13, **characterised in that** the size of the band and of the pitch reduces by a factor of 2 between two successive projections.

17. The detection device according to claim 1, **characterised in that** the sensors are matrix, linear or light sensors.

18. The device for detecting the position of an object according to claim 17, **characterised in that** the topology of the sensors, on the object, is formed by a plurality of clusters of sensors, each cluster having a flat shape composed of three star shaped branches.

19. The device for detecting the position of an object according to claim 17, **characterised in that** the topology of the sensors, on the object, is formed by a plurality of clusters of sensors, each cluster having a parallelepipedic plane shape.

20. The detection device according to any one of the preceding claims, **characterised in that** the object is a helmet and the zone of travel is part of a cockpit.

21. A method for optically detecting the position and orientation of an object in space by means of a detection device according to claim 13, 14, 15 or 16, **characterised in that** said method comprises a first step of generating a succession of images by the holographic video projector, all of said images being different, each image providing a different signal on at least one cluster, and a second step of analysing signals received by the sensors of the cluster allowing the position and/or the attitude of the sensors to be found in space without prior indication.

22. The method for optically detecting the position and the orientation of an object in space by means of a device according to claim 7, 8, 9, 10, 11 or 12, **characterised in that** it comprises:
● a first step of generating an image comprising light patterns, said patterns being generated so as to illuminate the clusters;
● a second step of analysing signals received by the sensors that allows the position of the sensors in space to be found;
● finally, a third step of controlling that allows the patterns of the image generated on the clusters to be re-positioned.

23. The method for optically detecting the position of an object, **characterised in that** it comprises an initialisation step carried out according to the method of claim 21 and an operating step corresponding to the method according to claim 22.

## Patentansprüche

1. Vorrichtung zur optischen Detektion der Position und/oder Orientierung eines Objekts, das sich in einer gegebenen Bewegungszone bewegt, wobei die Vorrichtung Folgendes umfasst: elektrooptische Sensoren, die auf dem Objekt in Gruppen, Cluster genannt, verteilt angeordnet sind, Analyse- und Rechenmittel, mit denen die Position und/oder Lage des Objekts ermitteln werden kann/können, elektronische Mittel zum Erzeugen von Bildern und ein Display und Projektionsoptik umfassende optische Projektionsmittel, **dadurch gekennzeichnet, dass** die optischen Projektionsmittel in einem Projektionskegel an jedem Punkt der Bewegungszone ein scharfes Bild emittieren, wobei eine Analyse der von den Sensoren von wenigstens einem Cluster empfangenen Signale eine Feststellung der Position und/oder Lage des Objekts in dem durch die Projektionsmittel definierten Bezugspunkt zulässt, der von einer Ebene lotrecht zur Projektionsachse, Bildebene genannt, und der Projektionsachse gebildet wird.

2. Detektionsvorrichtung nach Anspruch 1, **dadurch gekennzeichnet, dass** die Bildprojektionsmittel ein holografischer Videoprojektor sind, wobei der holografische Videoprojektor eine kohärente Lichtquelle und ein Display zum Realisieren eines Phasenbildes umfasst, wobei die Projektionsoptik so ausgelegt ist, dass sie von der von der Lichtquelle emittierten Welle eine erste Referenzwelle und eine zweite Welle erzeugt, die von dem Display moduliert wird, und Mittel aufweist, die eine Interferenz dieser beiden Wellen zulassen.

3. Detektionsvorrichtung nach Anspruch 2, **dadurch gekennzeichnet, dass** die Projektionsmittel in einem Raumwinkel von wenigstens 10 Grad bis höchstens 120 Grad projizieren.

4. Detektionsvorrichtung nach Anspruch 2 oder 3, **dadurch gekennzeichnet, dass** die Projektionsmittel die Bilder mit einer Geschwindigkeit von wenigstens 24 Bildern pro Sekunde erzeugen.

5. Detektionsvorrichtung nach Anspruch 2, 3 oder 4, **dadurch gekennzeichnet, dass** die Projektionsmittel polarisierte Bilder erzeugen.

6. Detektionsvorrichtung nach Anspruch 5, **dadurch gekennzeichnet, dass** die elektrooptischen Sensoren und die Analysemittel die Polarisation der empfangenen Signale interpretieren und/oder unterscheiden.

7. Detektionsvorrichtung nach Anspruch 2, 3, 4, 5 oder 6, **dadurch gekennzeichnet, dass** die in der Bildebene von den Projektionsmitteln projizierten Bilder einen Satz von Visieren umfassen, wobei die Visiere aus Lichtmustern zusammengesetzt sind.

8. Detektionsvorrichtung nach Anspruch 7, **dadurch gekennzeichnet, dass** die Visiere aus Mustern mit konstanter Lichtintensität zusammengesetzt sind.

9. Detektionsvorrichtung nach Anspruch 7 oder 8, **dadurch gekennzeichnet, dass** die Lichtquelle monochromatisch ist und in einem Frequenzband im Infrarotbereich oder im nahen Infrarotbereich emittiert, wobei die Empfindlichkeit der Sensoren an die emittierte Strahlung angepasst ist.

10. Detektionsvorrichtung nach Anspruch 7, 8 oder 9, **dadurch gekennzeichnet, dass** wenigstens ein Visier von konzentrischen Lichtmustern gebildet wird, wobei das Visier ein Positionsdetektionsvisier ist.

11. Detektionsvorrichtung nach Anspruch 7, 8 oder 9, **dadurch gekennzeichnet, dass** wenigstens ein Visier aus konzentrischen Ringen zusammengesetzt ist, wobei jeder Ring alternativ von dunklen und hellen Winkelteilen gebildet wird, wobei die Zahl der Winkelteile von einem Ring zum nächsten variiert, wobei das Visier ein Rolldetektionsvisier ist.

12. Detektionsvorrichtung nach Anspruch 7, 8, 9, 10 oder 11, **dadurch gekennzeichnet, dass** das Bild zwei Positionsdetektionsvisiere und ein Rolldetektionsvisier umfasst.

13. Detektionsvorrichtung nach Anspruch 7, 8 oder 9, **dadurch gekennzeichnet, dass** ein einziges projiziertes Visier, das das Bild ganz oder teilweise einnimmt, aus Mustern zusammengesetzt ist, deren Form eine Serie von abwechselnd dunklen und beleuchteten parallelen Streifen bildet.

14. Detektionsvorrichtung nach Anspruch 13, **dadurch gekennzeichnet, dass** die Streifen von identischer Breite sind, wobei die zwei aufeinander folgende Streifen trennende Teilung konstant ist.

15. Detektionsvorrichtung nach Anspruch 13, **dadurch gekennzeichnet, dass** eine Serie von Visieren zeitlich aufeinander folgend mit Mustern projiziert wird, deren Teilung und Breite sich bei jedem erzeugten Bild ändern.

16. Detektionsvorrichtung nach Anspruch 13, **dadurch gekennzeichnet, dass** die Größe des Streifens und der Teilung zwischen zwei aufeinander folgenden Projektionen um einen Faktor 2 abnimmt.

17. Detektionsvorrichtung nach Anspruch 1, **dadurch gekennzeichnet, dass** die Sensoren Hardware-Sensoren, Linearsensoren oder Lichtsensoren sind.

18. Detektionsvorrichtung für die Position eines Objekts nach Anspruch 17, **dadurch gekennzeichnet, dass** die Topologie der Sensoren auf dem Objekt von mehreren Sensor-Clustern gebildet wird, wobei jedes Cluster eine ebene Form hat, die von drei sternförmigen Zweigen gebildet wird.

19. Detektionsvorrichtung für die Position eines Objekts nach Anspruch 17, **dadurch gekennzeichnet, dass** die Topologie der Sensoren auf dem Objekt von mehreren Sensor-Clustern gebildet wird, wobei jedes Cluster die Form eines ebenen Parallelepipeds hat.

20. Detektionsvorrichtung nach einem der vorherigen Ansprüche, **dadurch gekennzeichnet, dass** das Objekt ein Helm und die Bewegungszone ein Teil des Cockpits ist.

21. Verfahren zur optischen Detektion der Position und Orientierung eines Objekts im Raum mittels einer Detektionsvorrichtung nach Anspruch 13, 14, 15 oder 16, **dadurch gekennzeichnet, dass** das Verfahren einen ersten Schritt des Erzeugens, durch den holografischen Videoprojektor, einer Folge von völlig unterschiedlichen Bildern beinhaltet, wobei jedes Bild ein anderes Signal auf wenigstens einem Cluster ergibt, und einen zweiten Schritt des Analysierens der von den Sensoren des Clusters empfangenen Signale, der das Finden der Position und/oder der Lage der Sensoren im Raum ohne vorherige Anzeige zulässt.

22. Verfahren zur optischen Detektion der Position und Orientierung eines Objekts im Raum mittels einer Vorrichtung nach Anspruch 7, 8, 9, 10, 11 oder 12, **dadurch gekennzeichnet, dass** es Folgendes beinhaltet:
● einen ersten Schritt des Erzeugens eines Bildes, das Lichtmuster umfasst, wobei die Muster zum Beleuchten der Cluster erzeugt werden;
● einen zweiten Schritt des Analysierens der von den Sensoren empfangenen Signale, mit dem die Position der Sensoren im Raum gefunden werden kann;
● schließlich einen dritten Regelungsschritt, mit dem die Muster des erzeugten Bildes auf den Clustern erneut positioniert werden können.

23. Verfahren zur optischen Detektion der Position eines Objekts, **dadurch gekennzeichnet, dass** es einen Initialisierungsschritt umfasst, der mit dem Verfahren von Anspruch 21 durchgeführt wird, und einen Betriebsschritt, der dem Verfahren nach Anspruch 22 entspricht.
